(19) Europäisches Patentamt
European Patent Office
Office européen des brevets

(11) Veröffentlichungsnummer: **0 220 136**
**B1**

(12) # EUROPÄISCHE PATENTSCHRIFT

(45) Veröffentlichungstag der Patentschrift: **19.04.89**

(51) Int. Cl.[4]: **C 07 F 5/04,** C 10 M 139/00

(21) Anmeldenummer: **86810464.7**

(22) Anmeldetag: **20.10.86**

(54) **Borsäurekomplexe.**

(30) Priorität: **24.10.85 CH 4581/85**

(43) Veröffentlichungstag der Anmeldung: **29.04.87 Patentblatt 87/18**

(45) Bekanntmachung des Hinweises auf die Patenterteilung: **19.04.89 Patentblatt 89/16**

(84) Benannte Vertragsstaaten: **BE DE ES FR GB IT**

(56) Entgegenhaltungen:
**EP-A-0 005 497**
**EP-A-0 075 478**
**DE-A-2 838 473**
**US-A-2 795 548**
**US-A-3 111 383**
**US-A-4 465 605**

**CHEMICAL ABSTRACTS, Band 95, Nr. 12, 21. September 1981, Seite 100, Zusammenfassung Nr. 99685y, Columbus, Ohio, US; & JP-A-81 06 999 (TOHO CHEMICAL INDUSTRY CO., LTD) 14-02-1981**

(73) Patentinhaber: **CIBA- GEIGY AG, Klybeckstrasse 141, CH- 4002 Basel (CH)**

(72) Erfinder: **Wirth, Hermann O., Dr., Lessingstrasse 24, D-6140 Bensheim 3 (DE)**
Erfinder: **Schumacher, Rolf, Dr., Chemin de la Combettaz 40, CH- 1723 Marly (CH)**
Erfinder: **Müller, Klaus, Dr., Am Stadtgraben 7, D-7850 Lörrach (DE)**

**EP 0 220 136 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft Metallsalze komplexer Borsäuren, deren Verwendung als Additive in Schmiermitteln und Hydraulikölen, sowie Schmiermittel und Hydrauliköle enthaltend diese Metallsalze.

Weltweit werden verschiedene Typen von Zinkdialkyldithiophosphaten (ZDTP) als Verschleißschutzadditive eingesetzt. Auf dem Motorenölgebiet besteht jedoch ein Trend nach P-freien bzw. P-armen Verschleißschutzadditiven, da sich gezeigt hat, dass sich P-Verbindungen durch Tribofragmentierung zu Pyro- und Polyphosphaten umwandeln können. Diese Umwandlungsprodukte sind mit hoher Wahrscheinlichkeit für die Inhibierung der Abgasnachverbrennungskatalysatoren verantwortlich. (H.S. Gandhi, W.B. Williamson and J.L. Bomback, "Deactivation of three-way and oxidation catalyst dual bed emission control systems: Catalyst post mortem analyses from methanol-fueled vehicles" Applied Catalysis, 3 (1982), 79 - 88).

In den DE-OS-2 739 312 und DE-OS-2 838 473 sind komplexierte Metallsalze als antistatisch wirkende Zusätze in Polymeren und Schmiermitteln beschrieben.

Gegenstand der vorliegenden Erfindung sind Verbindungen der Formel I

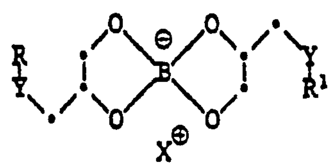

(I)

worin

R und $R_1$ gleich oder verschieden sind und einen Rest der Formel

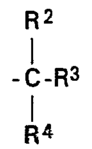

bedeuten, wobei $R^2$, $R^3$ und $R^4$ unabhängig voneinander $C_1$-$C_{18}$ Alkyl sind und zusammen nicht mehr als 22 C-Atome besitzen und $R^3$ und $R^4$ ausserdem Wasserstoff sind

oder worin

R und $R^1$ $C_5$-$C_6$-Cycloalkyl, unsubstituiertes oder durch $C_1$-$C_4$-Alkyl substituiertes Phenyl, Naphthyl, $C_7$-$C_{14}$-Aralkyl, Furfuryl, Thienyl sind

und worin

Y -S-, -O-, -NH-, -N($C_1$-$C_{12}$-Alkyl)-, -$CH_2$-, -CH($C_1$-$C_{12}$-Alkyl)- oder -C($C_1$-$C_{12}$-Alkyl)$_2$- sind und

$X^{\oplus}$ 1 Equivalent eines metallischen Kations aus der Gruppe $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Ni^{2\oplus}$, $Fe^{3\oplus}$, $Fe^{2\oplus}$, $Co^{2\oplus}$, $Cu^{2\oplus}$, $Al^{3\oplus}$, $Cr^{3\oplus}$, $VO^{3\oplus}$, $ZrO^{2\oplus}$, $MoO_2^{2\oplus}$ und $TiO^{2\oplus}$ bedeutet.

Stellen R und $R^1$ ein Radikal der Formel

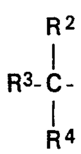

dar, so kann es sich um $R^2$-$CH_2$-, 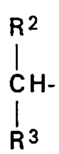 oder um 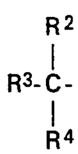 handeln,

wobei

$R^2$, $R^3$ und $R^4$ jeweils $C_1$-$C_{18}$-Alkyl sind. Bei $C_1$-$C_{18}$-Alkyl handelt es sich um geradkettige oder verzweigte Substituenten, wie beispielsweise Methyl, Ethyl, n-Propyl, Isopropyl, n-Butyl, Isobutyl, sec.-Butyl, tert.-Butyl, geradkettiges oder verzweigtes Pentyl, Hexyl, Heptyl, Octyl, Nonyl, Decyl, Undecyl, Dodecyl, Tridecyl, Tetradecyl, Pentadecyl, Hexadecyl, Heptadecyl oder Octadecyl.

Bevorzugt ist

$R^2$
|
$R^3$-C-,
|
$R^4$

worin $R^2$, $R^3$ und $R^4$ zusammen mit dem C-Atom, an das sie gebunden sind, $C_4$-$C_{20}$-Alkyl bilden, wobei keiner dieser Substituenten $R^2$, $R^3$ und $R^4$ Wasserstoff sein darf; besonders bevorzugt ist hier nun $C_4$-$C_{16}$-Alkyl, insbesondere ist tert.-Butyl, tert.-Nonyl oder tert.-Dodecyl (ex Phillips Petroleum) bevorzugt, wobei z. B. unter tert.-Dodecyl solch ein Rest verstanden werden soll, wie er für tertiäres Dodecylmercaptan in "Ullmanns Enzyklopädie der technischen Chemie", 4. Auflage, Band 23, Seite 181 - 182, Verlag Chemie, Weinheim beschrieben ist. Ganz speziell handelt es sich um tert.-Nonyl.

Stellen R und $R^1$ $C_5$-$C_6$-Cycloalkyl dar, so handelt es sich um Cyclopentyl oder Cyclohexyl, vorzugsweise Cyclohexyl.

Stellen R und $R^1$ durch $C_1$-$C_4$-Alkyl substituiertes Phenyl dar, so kann Phenyl ein- bis dreifach, bevorzugt jedoch einfach, substituiert sein; bei $C_1$-$C_4$-Alkyl handelt es sich um Methyl, Ethyl, n-Propyl, Isopropyl, n-Butyl, Isobutyl, sec.-Butyl oder tert.-Butyl.

Stellen R und $R^1$ $C_7$-$C_{14}$-Aralkyl dar, so handelt es sich beispielsweise um Benzyl, 1- oder 2-Phenylethyl, 3-Phenylpropyl, 2-Phenylisopropyl, 2-Phenylhexyl, Naphthylmethyl oder Naphthylbutyl, vorzugsweise um Benzyl.

Bevorzugt sind R und $R^1$ gleich.

Stellt Y ein Rest -N($C_1$-$C_{12}$-Alkyl)-, -CH($C_1$-$C_{12}$-Alkyl)- oder -C($C_1$-$C_{12}$-Alkyl)$_2$- dar, so handelt es sich bei $C_1$-$C_{12}$-Alkyl um geradkettige oder verzweigte Substituenten wie beispielsweise Methyl, Ethyl, n-Propyl, Isopropyl, n-Butyl, Isobutyl, sec.-Butyl, tert.-Butyl, geradkettiges oder verzweigtes Pentyl, Hexyl, Heptyl, Octyl, Nonyl, Decyl, Undecyl oder Dodecyl.

Bevorzugt handelt es sich bei Y um -S-, -O-, -$CH_2$-, -CH($C_1$-$C_{12}$-Alkyl)- oder -C($C_1$-$C_{12}$-Alkyl)$_2$-, besonders bevorzugt um -S-, -O- oder -$CH_2$-, speziell bevorzugt -S- oder -O-; ganz speziell bevorzugt um -S-.

Stellt $X^{\oplus}$ 1 Equivalent eines metallischen Kations dar, so handelt es sich um folgende Kationen: $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Ni^{2\oplus}$, $Fe^{3\oplus}$, $Fe^{2\oplus}$, $Co^{2\oplus}$, $Cu^{2\oplus}$, $Al^{3\oplus}$, $Cr^{3\oplus}$, $VO^{3\oplus}$, $ZrO^{2\oplus}$, $MoO_2^{2\oplus}$ und $TiO^{2\oplus}$, vorzugsweise um $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Cu^{2\oplus}$, $VO^{3\oplus}$, $ZrO^{2\oplus}$, $MoO_2^{2\oplus}$ und $TiO^{2\oplus}$. Insbesondere bevorzugt handelt es sich um $Li^{\oplus}$, $Na^{\oplus}$, $K^{\oplus}$, $Mg^{2\oplus}$, $Ca^{2\oplus}$, $Ba^{2\oplus}$ und $Zn^{2\oplus}$.

Eine bevorzugte Ausführungsform sind Verbindungen der Formel I, worin R und $R^1$ einen Rest der Formel

$R^2$
|
-C-$R^3$
|
$R^4$

der $C_5$-$C_6$-Cycloalkyl, unsubstituiertes oder durch $C_1$-$C_{14}$-Alkyl substituiertes Phenyl oder $C_7$-$C_{14}$-Aralkyl bedeuten.

Eine besonders bevorzugte Ausführungsform sind Verbindungen der Formel I, worin R und $R^1$ einen Rest der Formel

$R^2$
|
-C-$R^3$
|
$R^4$

bedeuten, worin $R^2$, $R^3$ und $R^4$ zuammen mit dem C-Atom, an das sie gebunden sind, $C_4$-$C_{20}$-Alkyl bilden, wobei keiner dieser Substituenten $R^2$, $R^3$ und $R^4$ Wasserstoff sein darf oder R und $R^1$ Benzyl sind.

Eine speziell bevorzugte Ausführungsform sind Verbindungen der Formel I, worin R und $R^1$ einen Rest der Formel

$R^2$
|
-C-$R^3$
|
$R^4$

bedeuten, worin $R^2$, $R^3$ und $R^4$ zusammen mit dem C-Atom, an das sie gebunden sind, $C_4$-$C_{20}$-Alkyl bilden, wobei keiner dieser Substituenten $R^2$, $R^3$ und $R^4$ Wasserstoff sein darf.

Ebenfalls von grossem Interesse sind Verbindungen der Formel I, worin Y -S-, -O-, -$CH_2$-, -CH($C_1$-$C_{12}$-Alkyl)- oder -C($C_1$-$C_{12}$-Alkyl)$_2$- bedeutet.

Von speziellem Interesse sind Verbindungen der Formel I, worin Y -S-, -O- oder -$CH_2$- bedeutet.

Von ganz besonderem Interesse sind Verbindungen gemäss Anspruch 1 der Formel I, worin Y -S- oder -O- bedeutet. Insbesondere bevorzugt sind Verbindungen der Formel I, worin Y -S- ist.

Beispiele für einzelne Verbindungen der Formel I sind die folgenden Substanzen:

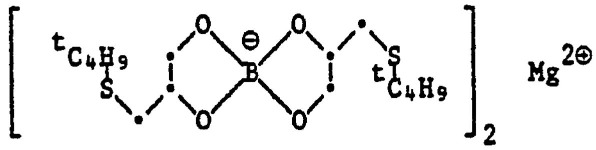

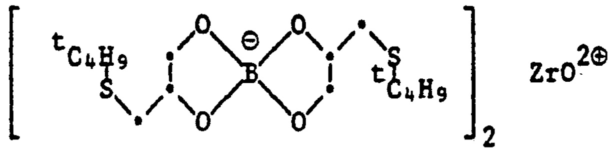

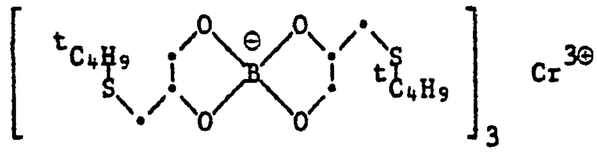

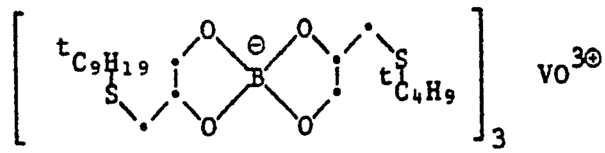

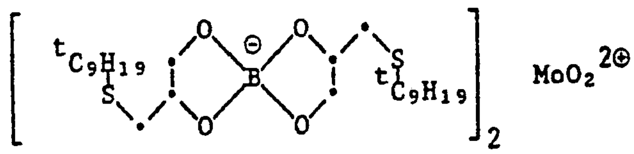

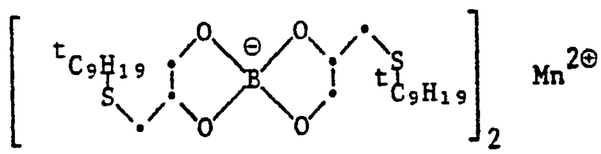

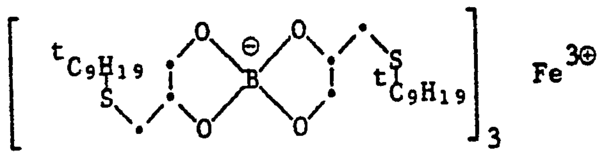

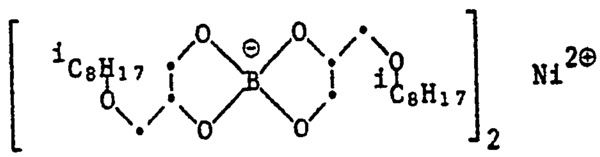

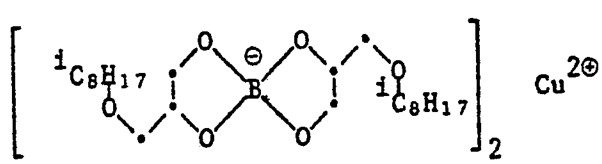

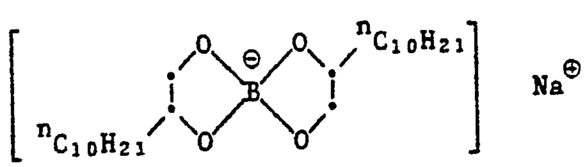

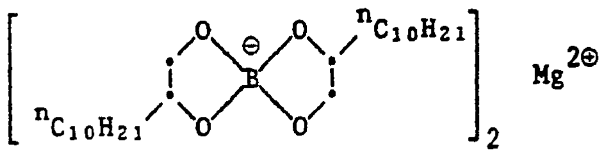

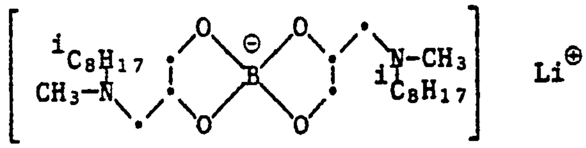

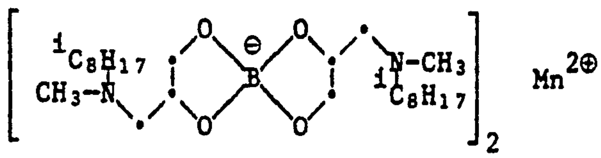

Die Herstellung der erfindungsgemässen Verbindungen der Formel I erfolgt in zwei Stufen, die vorteilhaft im gleichen Reaktionsgefäss ausgeführt werden.

In erster Stufe erfolgt die Umsetzung eines Epoxids der Formel II

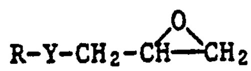

(II)

mit Borsäure. Die Umsetzung ungefähr stöchiometrischer Mengen (2 : 1) wird bevorzugt, ein geringer Überschuss an Borsäure oder an Epoxid der Formel II führt jedoch ebenfalls zu guten Resultaten.

Die Reaktion kann in einem unpolaren, inerten Lösungsmittel durchgeführt werden, welches vorzugsweise nicht mit Wasser mischbar ist, wie Chloroform, Hexan, Heptan, Cyclohexan oder Toluol. Die Reaktion kann vorteilhaft auch ohne Lösungsmittel durchgeführt werden, wobei das Reaktionsmedium bis zum Verschwinden der Borsäure gerührt wird. Das gebildete Reaktionswasser wird dann zweckmässig bei vermindertem Druck entfernt.

Die Reaktionstemperatur ist nicht kritisch, die Reaktion erfolgt bevorzugt bei erhöhter Temperatur, insbesondere bei 80 - 150°C. Als besonders günstig hat sich die Arbeitsweise bei Rückflusstemperatur des entsprechenden Lösungsmittels erwiesen. Bei lösungsmittelfreier Arbeitsweise wird eine Temperatur gewählt, die die Entfernung des Reaktionswassers bei vermindertem Druck ermöglicht.

Die erfindungsgemässen Metallsalze werden durch Reaktion des in der ersten Stufe erhaltenen Produktes der Formel III

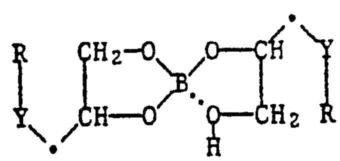

(III)

mit Metallhydroxiden wie beispielsweise LiOH, KOH oder $Ba(OH)_2$ oder Metallalkoholaten wie beispielsweise $Mg(OR')_2$, $Ca(OR')_2$ oder $Zn(OR')_2$ z. B. in alkoholischer Lösung oder auch in Toluol erhalten.

Die Vorsynthese des Zinkalkoholats erfolgt zweckmässig über die Stufe des Zinkdialkyls.

$$Zn(R')_2 + 2\,HO\text{-}R' \rightarrow Zn(OR')_2 + H_2$$

Für unsymmetrische Verbindungen wird das Epoxid

$R\text{-}Y\text{-}CH_2\text{-}CH\text{-}CH_2$ (mit O-Brücke) teilweise durch $R^1\text{-}Y\text{-}CH_2\text{-}CH\text{-}CH_2$ (mit O-Brücke) ersetzt.

Im weiteren betrifft die Erfindung Zusammensetzungen enthaltend ein Schmiermittel oder ein Hydrauliköl und eine wirksame Menge einer Verbindung der Formel I. Bevorzugt ist eine Zusammensetzung enthaltend ein Schmiermittel und eine wirksame Menge einer Verbindung der Formel I. Besonders bevorzugt ist eine Zusammensetzung, worin das Schmiermittel ein Motorenöl ist.

Eine weitere Ausführungsform ist eine Zusammensetzung enthaltend ein Schmiermittel oder ein Hydrauliköl, worin die wirksame Menge einer Verbindung der Formel I 0,01 - 5 Gew.-% bezogen auf das Schmiermittel oder das Hydrauliköl beträgt.

Eine bevorzugte Ausführungsform ist eine Zusammensetzung enthaltend ein Schmiermittel oder ein Hydrauliköl, worin die wirksame Menge einer Verbindung der Formel I 0,05 - 3 Gew.-% bezogen auf das

Schmiermittel oder das Hydrauliköl beträgt.

Ein weiterer Gegenstand der Erfindung ist die Verwendung von Verbindungen der Formel I als Additive für Schmiermittel und Hydrauliköle.

Die Verbindungen der Formel I sind im allgemeinen von flüssiger Beschaffenheit und meist von hoher Viskosität. Sie sind in Schmiermitteln und Hydraulikölen in ausreichender Menge löslich. Bei den hochviskosen Vertretern bietet die Verdünnung mit z. B. einem Paraffinöl oder auch einem entsprechenden Grundöl eine günstige Konfektionsform.

Die erfindungsgemässen Verbindungen sind als Zusätze zu Schmiermitteln und Hydraulikölen, insbesondere zu Motorenölen, sehr gut geeignet und führen zu einer Verbesserung der Hochdruck- und Antiverschleiss-Eigenschaften.

Die in Frage kommenden Schmiermittel sind dem Fachmann geläufig und z. B. im "Schmiermittel Taschenbuch" (Hüthig Verlag, Heidelberg, 1974) beschrieben.

Besonders geeignet sind neben Mineralölen z. B. Poly-α-Olefine, Schmiermittel auf Esterbasis, Phosphate, Glykole, Polyglykole und Polyalkylenglykole.

Die Schmiermittel können zusätzlich andere Additive enthalten, die zugegeben werden, um die Grundeigenschaften von Schmierstoffen noch weiter zu verbessern; dazu gehören: Antioxidantien, Metallpassivatoren, Rostinhibitoren, Viskositätsindex-Verbesserer, Stockpunkterniedriger, Dispergiermittel, Detergentien, sowie andere Hochdruck-Zusätze und Antiverschleiss-Additive.

**Beispiele für phenolische Antioxidantien**

**1. Alkylierte Monophenole**
2,6-Di-tert-butyl-4-methylphenol
2,6-Di-tert-butylphenol
2-tert-butyl-4,6-Dimethylphenol
2,6-Di-tert-butyl-4-ethylphenol
2,6-Di-tert-butyl-4-ethylphenol
2,6-Di-tert-butyl-4-n-butylphenol
2,6-Di-tert-butyl-4-iso-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert-butyl-4-methoxymethylphenol
o-tert-Butylphenol

**2. Alkylierte Hydrochinone**
2,6-Di-tert-butyl-4-methoxyphenol
2,5-Di-tert-butyl-hydrochinon
2,5-Di-tert-amyl-hydrochinon
2,6-Diphenyl-4-octadecyloxyphenol

**3. Hydroxylierte Thiodiphenylether**
2,2'-Thio-bis-(6-tert-butyl-4-methylphenol)
2,2'-Thio-bis-(4-octylphenol)
4,4'-Thio-bis-(6-tert-butyl-3-methylphenol)
4,4'-Thio-bis-(6-tert-butyl-2-methylphenol)

**4. Alkyliden-Bisphenole**
2,2'-Methylen-bis-(6-tert-butyl-4-methylphenol)
2,2'-Methylen-bis-(6-tert-butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert-butylphenol)
2,2'-Ethyliden-bis-(4,6-di-tert-butylphenol)
2,2'-Ethyliden-bis-(6-tert-butyl-4-iso-butylphenol)
2,2'-Methylen-bis-[6-(α-methylbenzyl)-4-nonylphenol]
2,2'-Methylen-bis-[6-(α,α-dimethylbenzyl)-4-nonylphenol]
4,4'-Methylen-bis-(2,6-di-tert-butylphenol)
4,4'-Methylen-bis-(6-tert-butyl-2-methylphenol)
1,1-Bis-(5-tert-butyl-4-hydroxy-2-methylphenyl)-butan
2,6-Di-(3-tert-butyl-5-methyl-2-hydroxybenzyl)-4-methylphenol

1,1,3-Tris-(5-tert-butyl-4-hydroxy-2-methylphenyl)-3-n-dodecylmercaptobutan
Ethylenglycol-bis-[3,3-bis-(3'-tert-butyl-4'-hydroxyphenyl)-butyrat]
Di-(3-tert-butyl-4-hydroxy-5-methylphenyl)-dicyclopentadien
Di-[2-(3'-tert-butyl-2'-hydroxy-5'-methyl-benzyl)-6-tert-butyl-4-methyl-phenyl]-terephthalat.

**5. Benzylverbindungen**
1,3,5-Tri-(3,5-di-tert-butyl-4-hydroxybenzyl)-2,4,6-trimethylbenzol
Di-(3,5-di-tert-butyl-4-hydroxybenzyl)-sulfid
3,5-Di-tert-butyl-4-hydroxybenzyl-mercaptoessigsäure-isooctylester
Bis-(4-tert-butyl-3-hydroxy-2,6-dimethylbenzyl)-dithiol-terephthalat
1,3,5-Tris-(3,5-di-tert-butyl-4-hydroxybenzyl)-isocyanurat
1,3,5-Tris-(4-tert-butyl-3-hydroxy-2,6-dimethylbenzyl)-isocyanurat
3,5-Di-tert-butyl-4-hydroxybenzyl-phosphonsäure-dioctadecylester
3,5-Di-tert-butyl-4-hydroxybenzyl-phosphonsäure-monoethylester
Calcium-salz.

**6. Acylaminophenole**
4-Hydroxy-laurinsäureanilid
4-Hydroxy-stearinsäureanilid
2,4-Bis-octylmercapto-6-(3,5-di-tert-butyl-4-hydroxyanilino)-s-triazin
N-(3,5-di-tert-butyl-4-hydroxyphenyl)-carbaminsäureoctylester.

**7. Ester der β-(3,5-Di-tert-butyl-4-hydroxyphenyl)-propionsäure**
mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

**8. Ester der β-(5-tert-butyl-4-hydroxy-3-methylphenyl)-propionsäure**
mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

**9. Amide der β-(3,5-Di-tert-butyl-4-hydroxyphenyl)-propionsäure,**
wie z. B.
N,N'-Di-(3,5-di-tert-butyl-4-hydroxyphenylpropionyl)-hexamethylendiamin
N,N'-Di-(3,5-di-tert-butyl-4-hydroxyphenylpropionyl)-trimethylendiamin
N,N'-Di-(3,5-di-tert-butyl-4-hydroxyphenylpropionyl)-hydrazin.

**Beispiele für aminische Antioxidantien:**

N,N'-Di-isopropyl-p-phenylendiamin
N,N'-Di-sec-butyl-p-phenylendiamin
N,N'-Bis-(1,4-dimethyl-pentyl)-p-phenylendiamin
N,N'-Bis-(1-ethyl-3-methyl-pentyl)-p-phenylendiamin
N,N'-Bis-(1-methyl-heptyl)-p-phenylendiamin
N,N'-Diphenyl-p-phenylendiamin
N,N'-Di-(naphthyl-2)-p-phenylendiamin
N-Isopropyl-N'-phenyl-p-phenylendiamin
N-(1,3-Dimethyl-butyl)-N'-phenyl-p-phenylendiamin
N-(1-Methyl-heptyl)-N'-phenyl-p-phenylendiamin
N-Cyclohexyl-N'-phenyl-p-phenylendiamin
4-(p-Toluol-sulfonamido)-diphenylamin
N,N'-Dimethyl-N,N'-di-sec-butyl-p-phenylendiamin
Diphenylamin
4-Isopropoxy-diphenylamin
N-Phenyl-1-naphthylamin
N-Phenyl-2-naphthylamin

octyliertes Diphenylamin
4-n-Butylamino-phenol
4-Butyrylamino-phenol
4-Nonanoylamino-phenol
4-Dodecanoylamino-phenol
4-Octadecanoylamino-phenol
Di-(4-methoxy-phenyl)-amin
2,6-Di-tert-butyl-4-dimethylamino-methyl-phenol
2,4'-Diamino-diphenylmethan
4,4'-Diamino-diphenylmethan
N,N,N',N'-Tetramethyl-4,4'-dismino-diphenylmethan
1,2-Di-[(2-methyl-phenyl)-amino]-ethan
1,2-Di-(phenylamino)-propan
(o-Tolyl)-biguanid
Di-[4-(1',3'-dimethyl-butyl)-phenyl)amin
tert-octyliertes N-Phenyl-1-naphthylamino
Gemisch aus mono- und dialkylierten tert-Butyl-/tert-Octyldiphenylaminen.

**Beispiele für Metallpassivatoren sind:**

für Kupfer, z. B.:
Triazol, Benztriazol, Toluoltriazol und deren Derivate, 2-Mercaptobenzthiazol, 2,5-Dimercaptothiadiazol, Salicyliden-propylendiamin, Salze von Salicylaminoguanidin.

**Beispiele für Rost-Inhibitoren sind:**

a) Organische Säuren, ihre Ester, Metallsalze und Anhydride, z. B.:
N-Oleoyl-sarcosin, Sorbitan-mono-oleat, Blei-naphthenat, Dodecenylbernsteinsäure-anhydrid, Alkenylbernsteinsäure-Halbester, 4-Nonylphenoxy-essigsäure.

b) Stickstoffhaltige Verbindungen, z. B.:
I. Primäre, sekundäre oder tertiäre aliphatische oder cycloaliphatische Amine und Amin-Salze von organischen und anorganischen Säuren, z. B. öllösliche Alkylammoniumcarboxylate.
II. Heterocyclische Verbindungen, z. B.:
Substituierte Imidazoline und Oxazoline.

c) Phosphorhaltige Verbindungen, z. B.:
Aminsalze von Phosphorsäurepartialestern.

d) Schwefelhaltige Verbindungen, z. B.:
Barium-dinonylnaphthalin-sulfonate, Calciumpetroleum-sulfonate.

**Beispiele für Viskositätsindex-Verbesserer sind z. B.:**

Polymethacrylate, Vinylpyrrolidon/Methacrylat-Copolymere, Polybutene, Olefin-Copolymere, Styrol/Acrylat-Copolymere.

**Beispiele für Stockpunkterniedriger sind z. B.:**

Polymethacrylat, alkylierte Naphthalinderivate.

**Beispiele für Dispergiermittel/Tenside sind z. B.:**

Polybutenylbernsteinsäure-imide, Polybutenylphosphonsäurederivate, basische Magnesium-, Calcium-, und Bariumsulfonate und -phenolate.

**Beispiele für Verschleißschutz-Additive sind z. B.:**

Schwefel und/oder Phosphor und/oder Halogen enthaltende Verbindungen, wie geschwefelte pflanzliche Öle, Zinkdialkyldithiophosphate, Tritolyl-phosphat, chlorierte Paraffine, Alkyl- und Aryldisulfide.

**Beispiel 1:**

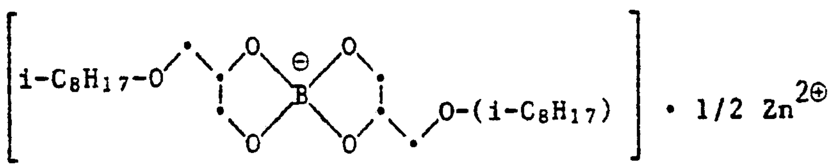

(50 % in Paraffinöl)

Ein Gemisch aus 22,4 g 2-Ethylhexylglycidyläther, 3,7 g Borsäure und 100 ml Toluol wird unter Rühren am Rückfluss erwärmt und das Reaktionswasser azeotrop entfernt. Anschliessend wird auf 25°C abgekühlt und 6,1 g Zink-di-sec.-butylat eingetropft, 30 Minuten nachgerührt, eine leichte Trübung abfiltriert und mit 28,2 g Paraffinöl versetzt. Das Lösungsmittel wird mittels Rotavapor abgetrennt. Rückstand: 56,4 g einer schwach gelben viskosen Flüssigkeit; $n_D^{20}$: 1,4647

**Beispiel 2:**

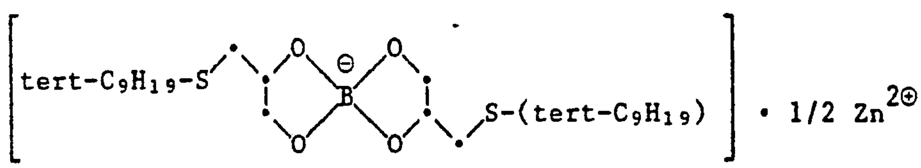

(50 % in Paraffinöl)

In 100 ml Toluol werden 23,8 g eines Borsäureesters des tert.-Nonyl-glycerinthioethers gelöst und unter Rühren 5,8 g Zink-di-sec.-butylat eingetropft. Das Gemisch wird 30 Minuten bei 25°C nachgerührt, eine leichte Trübung abfiltriert und mit 26,4 g Paraffinöl versetzt. Anschliessend wird das Toluol am Rotavapor abdestilliert. Rückstand: 52,8 g einer farblosen Flüssigkeit; $n_D^{20}$: 1,4861

**Beispiel 3:**

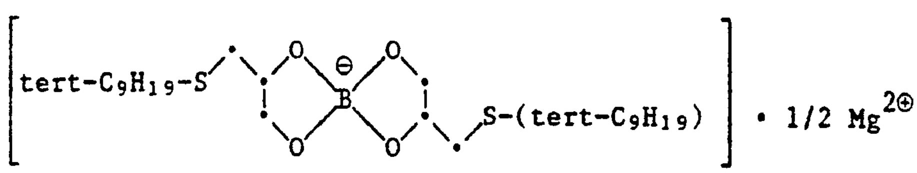

(50 % in Paraffinöl)

In analoger Weise, wie in Beispiel 2, wird das Magnesiumsalz hergestellt. Es werden 1,95 g Magnesiummethylat und 24,3 g Paraffinöl eingesetzt. Rückstand: 48,7 g einer schwach gelben viskosen Flüssigkeit; $n_D^{20}$: 1,4859

**Beispiel 4:**

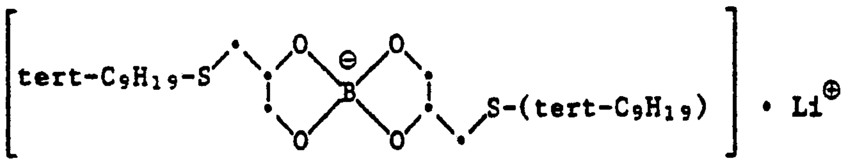

(50 % in Paraffinöl)

1,2 g Lithiumhydroxid werden in 30 ml Methanol gelöst. Zu dieser Lösung wird 25,1 g eines Borsäureesters des tert.-Nonyl-glycerinthioethers und 25,5 g Paraffinöl gegeben. Anschliessend wird das Methanol im Vakuum abdestilliert. Rückstand: 51,2 g einer schwach gelben viskosen Flüssigkeit; $n_D^{20}$: 1,4860

**Beispiel 4a:**

In 100 ml Methanol werden 3,3 g Lithiumhydroxid gelöst und unter Rühren mit 47 g eines Umsetzungsproduktes aus 2 Mol tert.-Butyl-glycidylthioether und 1 Mol Borsäure versetzt. Nach beendeter exothermer Reaktion wird das Lösungsmittel am Rotavapor abdestilliert.
Rückstand: 47,5 g einer glasartigen festen Substanz; Erweichungspunkt: ~ 110°C

**Beispiele 5 - 8:**

Analog dem in Beispiel 4 beschriebenen Verfahren werden die Verbindungen der Beispiele 5 - 7 und analog dem in Beispiel 2 beschriebenen Verfahren wird die Verbindung des Beispiels 8 hergestellt, die in der folgenden Tabelle 1 zusammengestellt sind.

**Tabelle 1**

| Beispiel | Formel | $n_D^{20}$ |
|---|---|---|
| 5 | 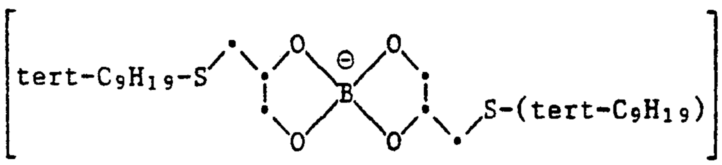 •K$^{\oplus}$ | 1,4840 |
| 6 | 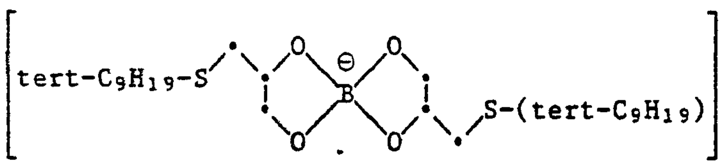 •Na$^{\oplus}$ | 1,4850 |
| 7 | 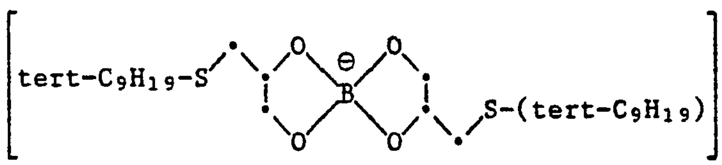 •1/2 Ba$^{2\oplus}$ | 1,4862 |
| 8 | 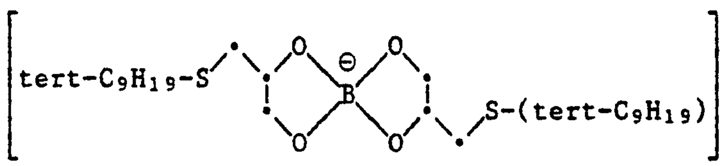 •1/2 Ca$^{2\oplus}$ | 1,4856 |

**Beispiel 9: Charakterisierung der Verschleißschutzwirkung**

Die Verschleißschutzwirkung wurde mit einem kommerziellen Schwing-Reib-Verschleissgerät (SRV-Gerät) der Firma Optimol GmbH, München bestimmt. (R. Schumacher et al., ASLE Transaction 26, 1(1982), 94 - 101).

Dieses Gerät basiert auf dem folgenden Prinzip: Eine Stahlkugel (100 Cr 6), auf die eine Kraft $F_N$ wirkt, oszilliert auf einem Stahlzylinder. Die Kugel ist in einer Halterung fixiert und führt demnach eine oszillierende Gleitbewegung aus. Die Horizontal- und Vertikalkraft wird durch einen piezoelektrischen Kraftaufnehmer bestimmt. Unter den vorliegenden Versuchsbedingungen betrug die maximale Hertz'sche Normalspannung 2740 N/mm$^2$, die maximale Schubspannung 850 N/mm$^2$. Kugel und Zylinder waren aus demselben Werkzeugstahl hergestellt worden.

Einige Tropfen Öl, welche die zu untersuchende Verbindung gelöst enthielt, wurden zwischen Zylinder und Kugel aufgebracht. Die folgenden Testbedingungen wurden gewählt:

Last: 200 N, Frequenz: 50 Hz, Amplitude: 1000 µ,

Temperatur: 100 - 150° C, Prüfzeit: 2 h.

Zur Charakterisierung des Verschleisses wurde mit einem Tastschnittgerät (Talysurf der Firma Rank Taylor Hobson, Leicester, England) ein Querprofil aufgenommen. Als Verschleissmass diente die integrierte Querprofilfläche.

Die folgenden Verbindungen wurden im SRV-Gerät geprüft

*1 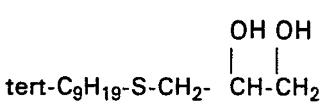

*2 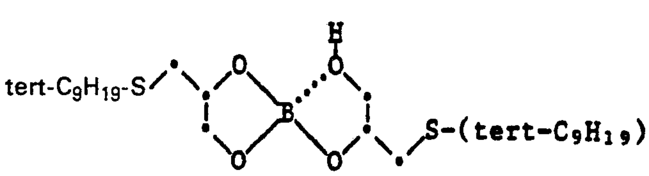

#3 Verbindung aus Beispiel 5
#4 Verbindung aus Beispiel 7
#5 Verbindung aus Beispiel 2
#6 Verbindung aus Beispiel 4
#7 Verbindung aus Beispiel 8
#8 Verbindung aus Beispiel 3

#9 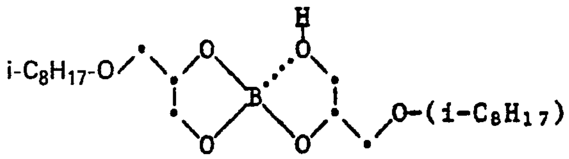

#10 Verbindung aus Beispiel 1.

Die Resultate sind in Tabelle 2 wiedergegeben.

**Tabelle 2**

Prüföl: Polyalphaolefin ISO VG 100, S-Gehalt < 1,5 ppm

| # | Konz. Gew.-% | Verbdg. Beisp. | Kation | Profilfläche (rel. Mass) 100°C | 120°C | 150°C |
|---|---|---|---|---|---|---|
| 1 | 1 | - | - | 11,5 | 14,0 | 33,8 |
| 1 | 2 | - | - | 8,7 | 27,9 | 39,1 |
| 2 | 2 | - | $H^{\oplus}$ | 5,3 | 6,6 | 22,5 |
| 3 | 1 | 5 | $K^{\oplus}$ | 6,7 | 6,8 | 10,0 |
| 4 | 2 | 7 | $Ba^{2\oplus}$ | 4,9 | 5,7 | 8,2 |
| 5 | 2 | 2 | $Zn^{2\oplus}$ | 6,8 | 6,5 | 9,7 |
| 6 | 2 | 4 | $Li^{\oplus}$ | 2,4 | 4,9 | 7,0 |
| 7 | 2 | 8 | $Ca^{2\oplus}$ | 3,2 | 4,3 | 5,1 |
| 8 | 1 | 3 | $Mg^{2\oplus}$ | 3,6 | 4,7 | 4,8 |
| 9 | 2 | - | $H^{\oplus}$ | 3,9 | 6,2 | 30,4 |
| 10 | 2 | 1 | $Zn^{2\oplus}$ | 4,2 | 2,3 | 7,2 |
| Öl ohne Additiv | | | | 14,5 | 25 | 25 |

**Beispiel 10:**

Zwei Motorenöle 10 W/30 (Mineralöl, Lösungsmittel-raffiniert), voll formuliert mit verschiedenem Zinkdialkyl-dithiophosphat (ZDTP)-Gehalt A + B werden auf die in Beispiel 5 beschriebene Weise geprüft.

Motorenöl A: ZDTP-Gehalt = 0,75 Gew.-% (Gehalt an P 0.055 Gew.-%)
Motorenöl B: ZDTP-Gehalt = 1,5 Gew.-%.(Gehalt an P 0.11 Gew.-%)

Dem ZDTP-ärmeren Motorenöl werden je 2 Gew.-% der folgenden Borverbindungen zugesetzt und die Verschleißschutzeigenschaften gemessen.

#1 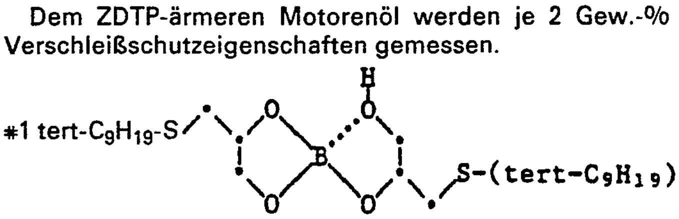

#2 Verbindung aus Beispiel 5
#3 Verbindung aus Beispiel 2
#4 Verbindung aus Beispiel 4
#5 Verbindung aus Beispiel 8
#6 Verbindung aus Beispiel 3

Die Resultate sind in Tabelle 2 wiedergegeben.

**Tabelle 2**

| Öl | # | Konz. Gew.-% | Verbdg. Beisp. | Profilfläche (rel. Mass) 100°C | 120°C | 150°C |
|---|---|---|---|---|---|---|
| A | - | - | | 1,3 | 2,8 | 80,5 |
| B | - | - | | 1,4 | 2,2 | 5,1 |
| A | 1 | 2 | | 1,5 | 2,0 | 4,6 |
| A | 2 | 2 | 5 | 4,1 | 2,8 | 5,1 |
| A | 3 | 2 | 2 | 2,1 | 1,6 | 2,2 |
| A | 4 | 2 | 4 | 1,7 | 2,0 | 3,3 |
| A | 5 | 2 | 8 | 1,8 | 3,4 | 5,1 |
| A | 6 | 2 | 3 | 1,4 | 3,8 | 3,1 |

**Beispiel 11: Nocken-Stössel-Verschleisstest**

Versuchsanordnung gemäss K. Müller et al., in Tribologie und Schmierungstechnik 31, 3(1984) 164 - 168.

Sumpfschmierung: ca. 200 ml Testöl
Öltemperatur: 100°C
Drehzahl: 1500 $^{1}$/min

Prüfprogramm: Die Federkraft wird jeweils nach 1 Stunde Laufzeit stufenweise um 100 N erhöht, beginnend bei 1000 N Spitzenkraft. Die Schadenkraftstufe ist erreicht, wenn der Summenverschleiss (Nocken und Stössel) den Wert 0,25 mm überschritten hat.

**Tabelle 4**

| Oelformulierung | Nocken-Stössel-Schadens-Kraftstufe [N] |
|---|---|
| Motorenöl 10 W-30 (ohne Verschleißschutzkomponente) | 1100 |
| Motorenöl 10 W-30 + 1 % Borverbindung aus Beispiel 4 | 1600 |
| Motorenöl 10 W-30 + 1,1 % Zn-dialkyldithiophosphat | 1500 |
| Motorenöl 10 W-30 + 0,75 % Zn-dialkyldithiophosphat + 0,75 % Borverbindung aus Beispiel 4 | 2000 |
| Zum Vergleich: | |
| CEC-Referenzöl RL 85* | 1890 (Mittelwert aus 7 Einzelmessungen) |
| CEC-Referenzöl RL 33 * | 1320 (Mittelwert aus 5 Einzelmessungen) |

* CEC = Coordinating European Couneil

Die o.a. Referenzöle werden zur Überprüfung von Nocken-Stössel-Verschleissmethoden eingesetzt. Dabei entspricht das CEC-RL 85 einem guten, das CEC-RL 33 einem schwachen Verhalten.

**Patentansprüche** für die Vertragsstaaten: DE, GB, FR, IT, BE

1. Verbindungen der Formel I

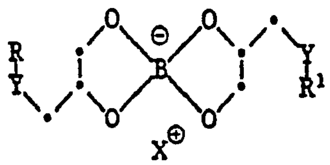

(I)

worin

R und $R^1$ gleich oder verschieden sind und einen Rest der Formel

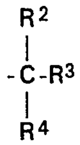

bedeuten, wobei $R^2$, $R^3$ und $R^4$ unabhängig voneinander $C_1$-$C_{18}$-Alkyl sind und zusammen nicht mehr als 22 C-Atome besitzen und $R^3$ und $R^4$ ausserdem Wasserstoff sind

oder worin

R und $R^1$ $C_5$-$C_6$-Cycloalkyl, unsubstituiertes oder durch $C_1$-$C_4$-Alkyl substituiertes Phenyl, Naphthyl, $C_7$-$C_{14}$-Aralkyl, Furfuryl, Thienyl sind

und worin

Y -S-, -O-, -NH-, -N($C_1$-$C_{12}$-Alkyl)-, -$CH_2$-, -CH($C_1$-$C_{12}$-Alkyl)- oder -C($C_1$-$C_{12}$-Alkyl$)_2$- sind und

$X^{\oplus}$ 1 Equivalent eines metallischen Kations aus der Gruppe $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Ni^{2\oplus}$, $Fe^{3\oplus}$, $Fe^{2\oplus}$, $Co^{2\oplus}$, $Cu^{2\oplus}$, $Al^{3\oplus}$, $Cr^{3\oplus}$, $VO^{3\oplus}$, $ZrO^{2\oplus}$, $MoO_2^{2\oplus}$ und $TiO^{2\oplus}$ bedeutet.

2. Verbindungen gemäss Anspruch 1, der Formel I, worin R und $R^1$ gleich sind.

3. Verbindungen gemäss Anspruch 1 der Formel I, worin R und $R^1$ einen Rest der Formel

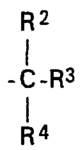

oder $C_5$-$C_6$-Cycloalkyl, unsubstituiertes oder durch $C_1$-$C_4$-Alkyl substituiertes Phenyl oder $C_7$-$C_{14}$-Aralkyl bedeuten.

4. Verbindungen gemäss Anspruch 1 der Formel I, worin

R und $R^1$ einen Rest der Formel

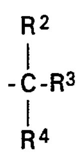

bedeuten, worin $R^2$, $R^3$ und $R^4$ zusammen mit dem C-Atom, an das sie gebunden sind, $C_4$-$C_{20}$-Alkyl bilden, wobei keiner dieser Substituenten $R^2$, $R^3$ und $R^4$ Wasserstoff sein darf

oder R und $R^1$ Benzyl sind.

5. Verbindungen gemäss Anspruch 4 der Formel I, worin R und $R^1$ einen Rest der Formel

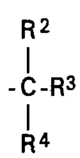

bedeuten.

6. Verbindungen gemäss Anspruch 5 der Formel I worin R und $R^1$ tert-Nonyl bedeuten.

7. Verbindungen gemäss Anspruch 1 der Formel I, worin Y -S-, -O-, -$CH_2$-, -CH($C_1$-$C_{12}$-Alkyl)- oder -C($C_1$-$C_{12}$-Alkyl$)_2$- bedeutet.

8. Verbindungen gemäss Anspruch 1 der Formel I, worin Y -S-, -O- oder -$CH_2$ bedeutet.

9. Verbindungen gemäss Anspruch 1 der Formel I, worin Y -S- oder -O- bedeutet.

10. Verbindungen gemäss Anspruch 1 der Formel I, worin Y -S- ist.

11. Verbindungen gemäss Anspruch 1 der Formel I, worin $X^{\oplus}$ 1 Equivalent eines metallischen Kations aus der Gruppe $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Cu^{2\oplus}$, $VO^{3\oplus}$, $ZrO^{2\oplus}$, $MoO_2^{2\oplus}$ und $TiO^{2\oplus}$ bedeutet.

12. Verbindungen gemäss Anspruch 1 der Formel I, worin $X^{\oplus}$ 1 Equivalent eines metallischen Kations aus der

Gruppe $Li^{\oplus}$, $Na^{\oplus}$, $Mg^{2\oplus}$, $Ca^{2\oplus}$, $Ba^{2\oplus}$ und $Zn^{2\oplus}$ bedeutet.

13. Zusammensetzung enthaltend ein Schmiermittel oder ein Hydrauliköl und eine wirksame Menge einer Verbindung der Formel I gemäss Anspruch 1.

14. Zusammensetzung gemäss Anspruch 13 enthaltend ein Schmiermittel.

15. Zusammensetzung gemäss Anspruch 14, worin das Schmiermittel ein Motorenöl ist.

16. Zusammensetzung gemäss Anspruch 13, worin die wirksame Menge einer Verbindung der Formel I 0,01 - 5 Gew.-% bezogen auf das Schmiermittel oder das Hydrauliköl beträgt.

17. Zusammensetzung gemäss Anspruch 16, worin die wirksame Menge einer Verbindung der Formel I 0,05 - 3 Gew.-% beträgt.

18. Verwendung der Verbindungen der Formel I gemäss Anspruch 1 als Additive für Schmiermittel und Hydrauliköle.

**Patentansprüche** für die Vertragsstaat: ES

1. Zusammensetzung enthaltend ein Schmiermittel oder ein Hydrauliköl und eine wirksame Menge einer Verbindung der Formel I

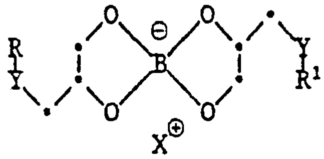

(I)

worin

R und $R^1$ gleich oder verschieden sind und einen Rest der Formel

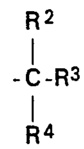

bedeuten, wobei $R^2$, $R^3$ und $R^4$ unabhängig voneinander $C_1$-$C_{18}$-Alkyl sind und zusammen nicht mehr als 22 C-Atome besitzen und $R^3$ und $R^4$ ausserdem Wasserstoff sind

oder worin

R und $R^1$ $C_5$-$C_6$-Cycloalkyl, unsubstituiertes oder durch $C_1$-$C_4$-Alkyl substituiertes Phenyl, Naphthyl, $C_7$-$C_{14}$-Aralkyl, Furfuryl, Thienyl sind

und worin

Y -S-, -O-, -NH-, -N($C_1$-$C_{12}$-Alkyl)-, -$CH_2$-, -CH($C_1$-$C_{12}$-Alkyl)- oder -C($C_1$-$C_{12}$-Alkyl$)_2$- sind und

$X^{\oplus}$ 1 Equivalent eines metallischen Kations aus der Gruppe $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Ni^{2\oplus}$, $Fe^{3\oplus}$, $Fe^{2\oplus}$, $Co^{2\oplus}$, $Cu^{2\oplus}$, $Al^{3\oplus}$, $Cr^{3\oplus}$, $VO^{3\oplus}$, $ZrO^{2\oplus}$, $MoO_2^{2\oplus}$ und $TiO^{2\oplus}$ bedeutet.

2. Zusammensetzung gemäss Anspruch 1 der Formel I, worin R und $R^1$ gleich sind.

3. Zusammensetzung gemäss Anspruch 1 der Formel I, worin R und $R^1$ einen Rest der Formel

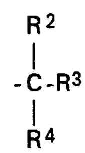

oder $C_5$-$C_6$-Cycloalkyl, unsubstituiertes oder durch $C_1$-$C_4$-Alkyl substituiertes Phenyl oder $C_7$-$C_{14}$-Aralkyl bedeuten.

4. Zusammensetzung gemäss Anspruch 1, worin in Formel I

R und $R^1$ einen Rest der Formel

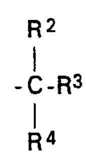

bedeuten, worin $R^2$, $R^3$ und $R^4$ zusammen mit dem C-Atom, an das sie gebunden sind, $C_4$-$C_{20}$-Alkyl bilden, wobei keiner dieser Substituenten $R^2$, $R^3$ und $R^4$ Wasserstoff sein darf

oder R und $R^1$ Benzyl sind.

5. Zusammensetzung gemäss Anspruch 4, worin in Formel I R und $R^1$ einen Rest der Formel

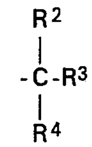

bedeuten.

6. Zusammensetzung gemäss Anspruch 5, worin in Formel I R und $R^1$ tert-Nonyl bedeuten.

7. Zusammensetzung gemäss Anspruch 1, worin in Formel I Y -S-, -O-, $-CH_2-$, $-CH(C_1-C_{12}\text{-Alkyl})-$ oder $-C(C_1-C_{12}\text{-Alkyl})_2-$ bedeutet.

8. Zusammensetzung gemäss Anspruch 1, worin in Formel I Y -S-, -O- oder $-CH_2$ bedeutet.

9. Zusammensetzung gemäss Anspruch 1, worin in Formel I Y -S- oder -O- bedeutet.

10. Zusammensetzung gemäss Anspruch 1, worin in Formel I Y -S- ist.

11. Zusammensetzung gemäss Anspruch 1, worin in Formel I $X^{\oplus}$ 1 Equivalent eines metallischen Kations aus der Gruppe $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Cu^{2\oplus}$, $VO^{3\oplus}$, $ZrO^{2\oplus}$, $MoO_2^{2\oplus}$ und $TiO^{2\oplus}$ bedeutet.

12. Zusammensetzung gemäss Anspruch 1, worin in Formel I $X^{\oplus}$ 1 Equivalent eines metallischen Kations aus der Gruppe $Li^{\oplus}$, $Na^{\oplus}$, $Mg^{2\oplus}$, $Ca^{2\oplus}$, $Ba^{2\oplus}$ und $Zn^{2\oplus}$ bedeutet.

13. Zusammensetzung gemäss Anspruch 1 enthaltend ein Schmiermittel.

14. Zusammensetzung gemäss Anspruch 13, worin das Schmiermittel ein Motorenöl ist.

15. Zusammensetzung gemäss Anspruch 1, worin die wirksame Menge einer Verbindung der Formel I 0,01 - 5 Gew.-% bezogen auf das Schmiermittel oder das Hydrauliköl beträgt.

16. Zusammensetzung gemäss Anspruch 15, worin die wirksame Menge einer Verbindung der Formel I 0,05 - 3 Gew.-% beträgt.

17. Verfahren zur Herstellung einer Verbindung der Formel I, dadurch gekennzeichnet, dass ein Epoxid der Formel II

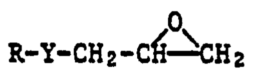 (II)

mit Borsäure im stöchiometrischen Verhältnis von 2 : 1 zu einer Verbindung der Formel III

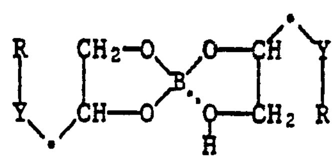 (III)

und diese mit einem Metallhydroxid oder einem Metallalkoholat zur Verbindung der Formel I umsetzt.

18. Verfahren zur Verbesserung der Hochdruck- und Verschleißschutzeigenschaften von Schmiermitteln oder Hydraulikölen durch Zugabe einer Verbindung der Formel I.

**Claims** for the contracting states: BE, DE, FR, GB, IT

1. A compound of formula I

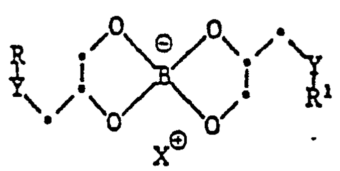 (I)

wherein

R and $R^1$ are identical or different and are a radical of the formula

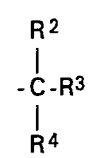

where $R^2$, $R^3$ and $R^4$ independently of one another are $C_1$-$C_{18}$alkyl and together have not more than 22 carbon atoms, and $R^3$ and $R^4$ are also hydrogen,

or wherein

R and $R^1$ are $C_5$-$C_6$cycloalkyl, unsubstituted or $C_1$-$C_4$alkyl-substituted phenyl, or naphthyl, $C_7$-$C_{14}$aralkyl, furfuryl or thienyl, and wherein

Y is -S-, -O-, -NH-, -N($C_1$-$C_{12}$alkyl)-, $-CH_2-$, -CH($C_1$-$C_{12}$alkyl)-or - C($C_1$-$C_{12}$alkyl)$_2$- and

$X^{\oplus}$ is 1 equivalent of a metallic cation from the group $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\ominus}$, $Ni^{2\ominus}$, $Fe^{3\ominus}$, $Fe^{2\ominus}$, $Co^{2\oplus}$, $Cu^{2\oplus}$, $Al^{3\ominus}$, $Cr^{3\oplus}$, $VO^{3\oplus}$, $ZrO^{2\oplus}$, $MoO_2^{2\oplus}$ and $TiO^{2\oplus}$.

2. A compound according to claim 1 of formula I, wherein R and $R^1$ are identical.

3. A compound according to claim 1 of formula I, whereim R amd $R^1$ are a radical of the formula

$R^2$
|
-C-$R^3$
|
$R^4$

or $C_5$-$C_6$cycloalkyl, unsubstituted or $C_1$-$C_{14}$alkyl-substituted phenyl, or $C_7$-$C_{14}$aralkyl.

4. A compound according to claim 1 of formula I, wherein

R and $R^1$ are a radical of the formula

$R^2$
|
-C-$R^3$
|
$R^4$

wherein $R^2$, $R^3$ and $R^4$, together with the carbon atom to which they are attached, form $C_4$-$C_{20}$alkyl, where none of these substituents $R^2$, $R^3$ and $R^4$ may be hydrogen,

or R and $R^1$ are benzyl.

5. A compound according to claim 4 of formula I, wherein R and $R^1$ are a radical of the formula

$R^2$
|
-C-$R^3$
|
$R^4$

6. A compound according to claim 5 of formula I, wherein R and $R^1$ are tert-nonyl.

7. A compound according to claim 1 of formula I, wherein Y is -S-, -O-, $-CH_2-$, -CH($C_1$-$C_{12}$alkyl)- or -C($C_1$-$C_{12}$alkyl)$_2$-.

8. A compound according to claim 1 of formula I, wherein Y is -S- -O- or $-CH_2-$.

9. A compound according to claim 1 of formula I, wherein Y is -S- or -O-.

10. A compound according to claim 1 of formula I, wherein Y is -S-.

11. A compound according to claim 1 of formula I, wherein $X^{\oplus}$ is 1 equivalent of a metallic cation from the group $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Cu^{2\oplus}$, $VO^{3\oplus}$, $ZrO^{2\oplus}$, $MoO_2^{2\oplus}$ and $TiO^{2\oplus}$.

12. A compound according to claim 1 of formula I, wherein $X^{\oplus}$ is 1 equivalent of a metallic cation from the group $Li^{\oplus}$, $Na^{\oplus}$, $Mg^{2\oplus}$, $Ca^{2\oplus}$, $Ba^{2\oplus}$ and $Zn^{2\oplus}$.

13. A composition containing a lubricant or a hydraulic oil and an effective amount of a compound of formula I according to claim 1.

14. A composition according to claim 13 containing a lubricant.

15. A composition according to claim 14, wherein the lubricant is a motor oil.

16. A composition according to claim 13, wherein the effective amount of a compound of formula I is 0.01 to 5 % by weight, based on the lubricant or the hydraulic oil.

17. A composition according to claim 16, wherein the effective amount of a compound of formula I is 0.05 to 3 % by weight.

18. Use of a compound of formula I according to claim 1 as additive for lubricants and hydraulic oils.

**Claims** for the contracting state: ES

1. A composition containing a lubricant or a hydraulic oil and an effective amount of a compound of formula I

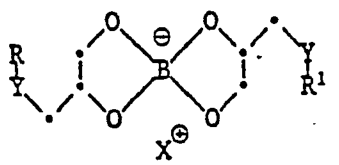

(I)

wherein
R and $R^1$ are identical or different and are a radical of the formula

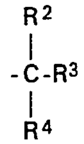

where $R^2$, $R^3$ and $R^4$ independently of one another are $C_1$-$C_{18}$alkyl and together have not more than 22 carbon atoms, and $R^3$ and $R^4$ are also hydrogen,
or wherein
R and $R^1$ are $C_5$-$C_6$cycloalkyl, unsubstituted or $C_1$-$C_4$alkyl-substituted phenyl, or naphthyl, $C_7$-$C_{14}$aralkyl, furfuryl or thienyl, and wherein
Y is -S-, -O-, -NH-, -N($C_1$-$C_{12}$alkyl)-, -$CH_2$-, -CH($C_1$-$C_{12}$alkyl)- or -C($C_1$-$C_{12}$alkyl$)_2$- and
$X^{\oplus}$ is 1 equivalent of a metallic cation from the group $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Ni^{2\oplus}$, $Fe^{3\oplus}$, $Fe^{2\oplus}$, $Co^{2\oplus}$, $Cu^{2\oplus}$, $Al^{3\oplus}$, $Cr^{3\oplus}$, $VO^{3\oplus}$, $ZrO^{2\oplus}$, $MoO_2^{2\oplus}$ and $TiO^{2\oplus}$.

2. A composition according to claim 1, wherein in formula I R and $R^1$ are identical.

3. A composition according to claim 1, wherein in formula I R and $R^1$ are a radical of the formula

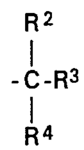

or $C_5$-$C_6$cycloalkyl, unsubstituted or $C_1$-$C_{14}$alkyl-substituted phenyl, or $C_7$-$C_{14}$aralkyl.

4. A composition according to claim 1, wherein in formula I
R and $R^1$ are a radical of the formula

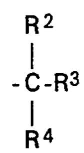

wherein $R^2$, $R^3$ and $R^4$, together with the carbon atom to which they are attached, form $C_4$-$C_{20}$alkyl, where none of these substituents $R^2$, $R^3$ and $R^4$ may be hydrogen,
or R and $R^1$ are benzyl.

5. A composition according to claim 4, wherein in formula I R and $R^1$ are a radical of the formula

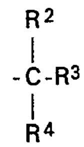

6. A composition according to claim 5, wherein in formula I R and $R^1$ are tert-nonyl.

7. A composition according to claim 1, wherein in formula I Y is -S-, -O-, -$CH_2$-, -CH($C_1$-$C_{12}$alkyl)- or -C($C_1$-$C_{12}$alkyl$)_2$-.

8. A composition according to claim 1, wherein in formula I Y is -S-, -O- or -$CH_2$-.

9. A composition according to claim 1, wherein in formula I Y is -S- or -O-.

10. A composition according to claim 1, wherein in formula I Y is -S-.

11. A composition according to claim 1, wherein in formula I $X^{\oplus}$ is 1 equivalent of a metallic cation from the group $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Cu^{2\oplus}$, $VO^{3\oplus}$, $ZrO^{2\oplus}$, $MoO_2^{2\oplus}$ and $TiO^{2\oplus}$.

12. A composition according to claim 1, wherein in formula I $X^{\oplus}$ is 1 equivalent of a metallic cation from the group $Li^{\oplus}$, $Na^{\oplus}$, $Mg^{2\oplus}$, $Ca^{2\oplus}$, $Ba^{2\oplus}$ and $Zn^{2\oplus}$.

13. A composition according to claim 1 containing a lubricant.

14. A composition according to claim 13, wherein the lubricant is a motor oil.

15. A composition according to claim 1, wherein the effective amount of compound of formula I is 0.01 to 5 % by weight, based on the lubricant or the hydraulic oil.

16. A composition according to claim 15, wherein the effective amount of a compound of formula 1 is 0.05 to 3 % by weight.

17. A process for the preparation of a compound of formula I, which comprises reacting an epoxide of formula II

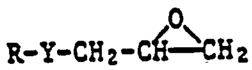

(II)

with boric acid in the stoichiometric ratio of 2 : 1 to give a compound of formula III

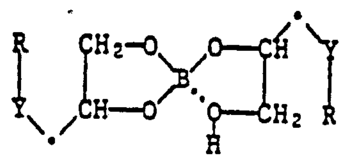

(III)

and reacting this with a metal hydroxide or a metal alcoholate to give a compound of formula I.

18. A process for improving the extreme pressure properties and anti-wear properties of lubricants or hydraulic oils by the addition of a compound of formula I.

**Revendications** pour les Etats contractants: BE, DE, FR, GB, IT

1. Composés répondant à la formule I:

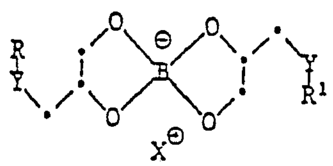

(I)

dans laquelle

R et $R^1$ représentent chacun, indépendamment l'un de l'autre, un radical répondant à la formule suivante:

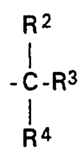

dans laquelle $R^2$, $R^3$ et $R^4$ représentent chacun, indépendamment les une des autres, un alkyle en $C_1$-$C_{18}$ et, pris dans leur ensemble, ne contiennent pas plus de 22 atomes de carbone, et $R^3$ et $R^4$ peuvent en outre représenter l'hydrogéne,

ou

R et $R^1$ représentent chacun un cycloalkyle en $C_5$ ou $C_6$, un phényle non substitué ou porteur d'un alkyle en $C_1$-$C_4$, un naphtyle, un aralkyle en $C_7$-$C_{14}$, un furfuryle ou un thiényle,

Y représente -S-, -O-, -NH-, -N($C_1$-$C_{12}$-alkyl)-, -CH -, -CH($C_1$-$C_{12}$-alkyl)- ou -C($C_1$-$C_{12}$-alkyl$)_2$-,

et

$X^{\ominus}$ représente un équivalent d'un cation métallique pris dans l'ensemble constitué par $Li^{\ominus}$, $Na^{\ominus}$, $K^{\ominus}$, $Mg^{2\ominus}$, $Ca^{2\ominus}$, $Ba^{2\ominus}$, $Zn^{2\ominus}$, $Mn^{2\ominus}$, $Ni^{2\ominus}$, $Fe^{3\ominus}$, $Fe^{2\ominus}$, $Co^{2\ominus}$, $Cu^{2\ominus}$ $Al^{3\ominus}$, $Cr^{3\ominus}$, $VO^{3\ominus}$, $ZrO^{2\ominus}$, $MoO^{2\ominus}$ et $TiO^{2\ominus}$.

2. Composés de formule I selon la revendication 1 dans lesquels R et $R^1$ sont identiques l'un à l'autre.

3. Composés de formule I selon la revendication 1 dans lesquels R et $R^1$ représentent un radical de formule:

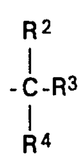

un radical cycloalkyle en $C_5$ ou $C_6$, un radical phényle non substitué ou porteur d'un alkyle en $C_1$-$C_4$ ou un radical aralkyle en $C_7$-$C_{14}$.

4. Composés de formule I selon la revendication 1 dans lesquels R et $R^1$ représentent un radical répondant à la formule:

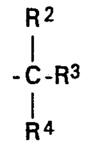

dans laquelle $R^2$, $R^3$ et $R^4$ forment ensemble, et avec l'atome de carbone auquel ils sont liés, un radical alkyle en $C_4$-$C_{20}$, et aucun de ces symboles $R^2$, $R^3$ et $R^4$ ne peut représenter l'hydrogène,

ou dans lesquels

R et $R_1$ représentent un radical benzyle.

5. Composés de formule I selon la revendication 4 dans lesquels R et $R^1$ représentent un radical de formule:

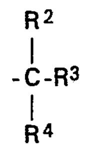

6. Composés de formule I selon la revendication 5 dans lesquels R et $R^1$ représentent un radical tert-nonyle.

7. Composés de formule I selon la revendication 1 dans lesquels Y représente -S-, -O-, $-CH_2-$, un radical $-CH(C_1$-$C_{12}$-alkyl)- ou un radical $-C(C_1$-$C_{12}$-alkyl$)_2$-.

8. Composés de formule I selon la revendication 1 dans lesquels Y représente -S-, -O- ou $-CH_2-$.

9. Composés de formule I selon la revendication 1 dans lesquels Y représente -S- ou -O-.

10. Composés de formule I selon la revendication 1 dans lesquels Y représente -S-.

11. Composés de formule I selon la revendication 1 dans lesquels $X^{\oplus}$ représente un équivalent d'un cation métallique pris dans l'ensemble constitué par $Li^{\oplus}$, $Na^{\oplus}$, $K^{\oplus}$, $Mg^{2\oplus}$, $Ca^{2\oplus}$, $Ba^{2\oplus}$, $Zn^{2\oplus}$, $Mn^{2\oplus}$, $Cu^{2\oplus}$, $VO^{3\oplus}$, $ZrO^{2\ominus}$ $MoO^{2\ominus}$ et $TiO^{2\oplus}$.

12. Composés de formule I selon la revendication 1 dans lesquels $X^{\oplus}$ représente un équivalent d'un cation métallique pris dans l'ensemble constitué par $Li^{\oplus}$, $Na^{\oplus}$, $Mg^{2\oplus}$, $Ca^{2\oplus}$, $Ba^{2\oplus}$ et $Zn^{2\oplus}$.

13. Composition qui contient un lubrifiant ou une huile hydraulique et une quantité efficace d'un composé de formule I selon la revendication 1.

14. Composition selon la revendication 13 qui contient un lubrifiant.

15. Composition selon la revendication 14 dans laquelle le lubrifiant est une huile pour moteurs.

16. Composition selon la revendication 13 dans laquelle la quantité efficace d'un composé de formule I est comprise entre 0,01 et 5 % en poids par rapport au lubrifiant ou à l'huile hydraulique.

17. Composition selon la revendication 16 dans laquelle la quantité efficace d'un composé de formule I est comprise entre 0,05 et 3 % en poids.

18. Application des composés de formule I selon l'exemple 1 comme additifs pour lubrifiants et pour huiles hydrauliques.

**Revendications** pour l'Etat contractant: ES

1. Composition qui contient un lubrifiant ou une huile hydraulique et une quantité efficace d'un composé répondant à la formule I:

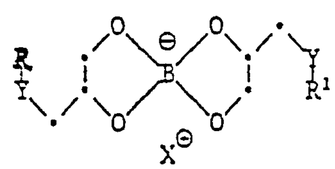

(I)

dans laquelle

R et $R^1$ représentent chacun, indépendamment l'un de l'autre, un radical répondant à la formule suivante:

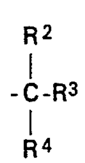

dans laquelle $R^2$, $R^3$ et $R^4$ représentent chacun, indépendamment les une des autres, un alkyle en $C_1$-$C_{18}$ et, pris dans leur ensemble, ne contiennent pas plus de 22 atomes de carbone, et $R^3$ et $R^4$ peuvent en outre représenter l'hydrogène,

ou

R et $R^1$ représentent chacun un cycloalkyle en $C_5$ ou $C_6$, un phényle non substitué ou porteur d'un alkyle en $C_1$-$C_4$, un naphtyle, un aralkyle en $C_7$-$C_{14}$, un furfuryle ou un thiényle,

Y représente -S-, -O-, -NH-, -N($C_1$-$C_{12}$-alkyl)-, -$CH_2$-, -CH($C_1$-$C_{12}$-alkyl)- ou -C($C_1$-$C_{12}$-alkyl)$_2$-,

et

$X^{\oplus}$ représente un équivalent d'un cation métallique pris dans l'ensemble constitué par $Li^{\oplus}$, $Na^{\ominus}$, $K^{\ominus}$, $Mg^{2\ominus}$, $Ca^{2\oplus}$, $Ba^{2\oplus}$, $Zn^{2\ominus}$, $Mn^{2\oplus}$, $Ni^{2\ominus}$, $Fe^{3\oplus}$, $Fe^{2\ominus}$, $Co^{2\ominus}$, $Cu^{2\oplus}$ $Al^{3\ominus}$, $Cr^{3\ominus}$, $VO^{3\oplus}$, $ZrO^{2\oplus}$, $MoO^{2\ominus}$ et $TiO^{2\oplus}$.

2. Composition selon la revendication 1 dans laquelle les symboles R et $R^1$ contenus dans la formule I sont identiques l'un à l'autre.

3. Composition selon la revendication 1 dans laquelle les symboles R et $R^1$ contenus dans la formule I représentent un radical de formule:

$$\begin{array}{c} R^2 \\ | \\ -C-R^3 \\ | \\ R^4 \end{array}$$

un radical cycloalkyle en $C_5$ ou $C_6$, un radical phényle non substitué ou porteur d'un alkyle en $C_1$-$C_4$ ou un radical aralkyle en $C_7$-$C_{14}$.

4. Composition selon la revendication 1 dans laquelle les symboles

R et $R^1$ contenus dans la formule I représentent un radical répondant à la formule:

$$\begin{array}{c} R^2 \\ | \\ -C-R^3 \\ | \\ R^4 \end{array}$$

dans laquelle $R^2$, $R^3$ et $R^4$ forment ensemble, et avec l'atome de carbone auquel ils sont liés, un radical alkyle en $C_4$-$C_{20}$, et aucun de ces symboles $R^2$, $R^3$ et $R^4$ ne peut représenter l'hydrogène,

ou dans lesquels

R et $R_1$ représentent un radical benzyle.

5. Composition selon la revendication 4 dans laquelle les symboles R et $R^1$ contenus dans la formule I représentent un radical de formule:

$$\begin{array}{c} R^2 \\ | \\ -C-R^3 \\ | \\ R^4 \end{array}$$

6. Composition selon la revendication 5 dans laquelle les symboles R et $R^1$ contenus dans la formule I représentent un radical tert-nonyle.

7. Composition selon la revendication 1 dans laquelle le symbole Y contenu dans la formule I représente -S-, -O-, -$CH_2$-, un radical -CH($C_1$-$C_{12}$-alkyl)- ou un radical -C($C_1$-$C_{12}$-alkyl)$_2$-.

8. Composition selon la revendication 1 dans laquelle le symbole Y contenu dans la formule I représente -S-, -O- ou -$CH_2$-.

9. Composition selon la revendication 1 dans laquelle le symbole Y contenu dans la formule I représente -S- ou -O-.

10. Composition selon la revendication 1 dans laquelle le symbole Y contenu dans la formule I représente -S-.

11. Composition selon la revendication 1 dans laquelle le symbole $X^{\oplus}$ contenu dans la formule I represente un équivalent d'un cation métallique pris dans l'ensemble constitué par $Li^{\oplus}$, $Na^{\ominus}$, $K^{\oplus}$, $Mg^{2\ominus}$, $Ca^{2\ominus}$, $Ba^{2\ominus}$, $Zn^{2\ominus}$, $Mn^{2\oplus}$, $Cu^{2\ominus}$, $VO^{3\ominus}$, $ZrO^{2\oplus}$, $MoO^{2\oplus}$ et $TiO^{2\oplus}$.

12. Composition selon la revendication 1 dans laquelle le symbole $X^{\oplus}$ contenu dans la formule I représente un équivalent d'un cation métallique pris dans l'ensemble constitué par $Li^{\oplus}$, $Na^{\ominus}$, $Mg^{2\ominus}$, $Ca^{2\oplus}$, $Ba^{2\ominus}$ et $Zn^{2\ominus}$.

13. Composition selon la revendication 1 qui contient un lubrifiant.

14. Composition selon la revendication 13 dans laquelle le lubrifiant est une huile pour moteurs.

15. Composition selon la revendication 1 dans laquelle la quantité efficace d'un composé de formule I est comprise entre 0,01 et 5 % en poids par rapport au lubrifiant ou à l'huile hydraulique.

16. Composition selon la revendication 15 dans laquelle la quantité efficace d'un composé de formule I est comprise entre 0,05 et 3 % en poids.

17. Procédé pour préparer un composé de formule I, caractérisé en ce qu'on fait réagir un époxyde de formule II:

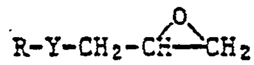 (II)

avec l'acide borique dans le rapport stoechiométrique 2 : 1, de manière à obtenir un composé de formule III:

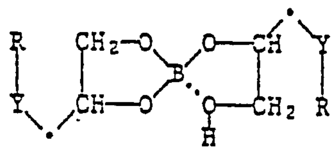 (III);

et on fait réagir celui-ci avec un hydroxyde de métal ou avec un alcoolate de métal de manière à obtenir le composé de formule I.

18. Procédé pour améliorer la tenue sous des pressions élevées et les propriétés anti-usures de lubrifiants au d'huiles hydrauliques selon lequel on ajoute un composé de formule I.